# EUROPÄISCHE PATENTANMELDUNG

(11) **EP 3 173 530 A1**
(43) Veröffentlichungstag der Anmeldung: **31.05.2017**
(21) Anmeldenummer: 15197143.9
(22) Anmeldetag: 30.11.2015
(51) Int. Cl.: E02B 8/08

(54) **VORRICHTUNG ZUR WANDERUNG VON WASSERTIEREN AN BARRIEREN IN GEWÄSSERN**

(71) Anmelder: MVM Holding GmbH, 1010 Wien (AT)
(72) Erfinder: Marth, Christian, 1230 Wien (AT); Seidl, Georg, 8010 Graz (AT)

(57) **Zusammenfassung**

Ein Gewässer ist durch eine Barriere (3) in ein Unterwasser (4) und ein Oberwasser (5) getrennt. An diesem Gewässer ist eine Vorrichtung (1) zur Wanderung von Wassertieren (2) zwischen dem Unterwasser (4) und dem Oberwasser (5) angeordnet. Die Vorrichtung (1) enthält einen Schacht (6), der zumindest zwei über zumindest einen Durchlass (8) miteinander verbundene beckenartige Abschnitte (7) aufweist. Der Schacht (6) umfasst eine mit einem Unterwasserschütz (12) verschließbare Unterwasseröffnung (14) im untersten beckenartigen Abschnitt, der mit dem Unterwasser (4) kommuniziert, und eine mit einem Oberwasserschütz (13) verschließbare Oberwasseröffnung (15) im obersten beckenartigen Abschnitt, der mit dem Oberwasser (5) kommuniziert. Zumindest zwei der beckenartigen Abschnitte (7) des Schachts (6) sind treppenhausartig seitlich nebeneinander und abschnittsweise übereinander angeordnet.

## Beschreibung

Die Erfindung betrifft eine an einem durch eine Barriere in ein Unterwasser und ein Oberwasser getrenntes Gewässer angeordnete Vorrichtung zur Wanderung von Wassertieren zwischen dem Unterwasser und dem Oberwasser, mit einem Schacht, der zumindest zwei über zumindest einen Durchlass miteinander verbundene beckenartige Abschnitte aufweist. Der Schacht umfasst eine mit einem Unterwasserschütz verschließbare Unterwasseröffnung im untersten beckenartigen Abschnitt, die mit dem Unterwasser kommuniziert, und eine mit einem Oberwasserschütz verschließbare Oberwasseröffnung im obersten beckenartigen Abschnitt, der mit dem Oberwasser kommuniziert.

Das Dokument US 1 621 170 offenbart eine Vorrichtung, die an einem Fluss angeordnet ist und zum Aufwandern von Fischen über ein Querbauwerk, beispielsweise einen Damm, dient. Solche Vorrichtungen werden üblicherweise als "Fischtreppe" oder "Fischweg" bezeichnet. Diese ermöglichen es Fischen oder anderen Wassertieren, die stromaufwärts wandern, Dämme oder ähnliche Barrieren zu umgehen. Dabei wird der Höhenunterschied vom stromaufwärts der Barriere liegenden Oberwasser zum stromabwärts der Barriere liegenden Unterwasser mittels einer großen Anzahl an einzelnen, treppenartig aneinander gereihten Becken überwunden.

Bei der bekannten Vorrichtung sind großflächige bauliche Maßnahmen notwendig, die sowohl ökologische als auch ökonomische Nachteile mit sich bringen. Wie im zuvor gebrachten Beispiel müssen solche Beckenkaskaden oft aufwändig neben dem Fluss ins Erdreich gegraben und/oder betoniert werden. Die einzelnen Betonbecken sind dabei üblicherweise nicht weiter beschichtet oder behandelt und stellen somit einen für die Wassertiere unnatürlichen Lebensraum dar, welcher die Wahrscheinlichkeit einer erfolgreichen Wanderung vermindert. Solche Vorrichtungen bieten vor allem kleinen Wassertieren wenig Schutzmöglichkeiten und erhöhen den Prädationsdruck innerhalb der Vorrichtung. Wassertiere, die sich bodennah bewegen, finden oft gar keine Möglichkeit zur Wanderung vor, da die Stufenhöhen zwischen den einzelnen Becken zu hoch sind. Zusätzlich ist die Regulierbarkeit der Durchflussmenge sowie der Fließgeschwindigkeit in solchen Vorrichtungen kaum beherrschbar, was wiederum die Zeit reduziert, während der die Vorrichtung zweckgemäß arbeitet.

Der Erfindung liegt somit die Aufgabe zugrunde, eine Vorrichtung und ein zugehöriges Verfahren zur Wanderung von Wassertieren über eine Barriere in Gewässern bereitzustellen, bei dem die vorstehenden Nachteile nicht auftreten, um hierdurch die ökologischen und ökonomischen Auswirkungen zu minimieren.

Erfindungsgemäß wird diese Aufgabe bei einer Vorrichtung dadurch gelöst, dass zumindest zwei der beckenartigen Abschnitte des Schachts treppenhausartig seitlich nebeneinander und abschnittsweise übereinander angeordnet sind.

Die gestellte Aufgabe wird erfindungsgemäß auch durch ein Verfahren zur Wanderung von Wassertieren gelöst, wobei
A) in einer Einlassphase das Unterwasserschütz geöffnet und gegebenenfalls das Oberwasserschütz teilweise geschlossen wird, wodurch eine Dotationsströmung vom Oberwasser ins Unterwasser eingestellt wird;
B) in einer Aufstauphase nach Ablauf einer Zeiteinheit das Unterwasserschütz teilweise geschlossen und das Oberwasserschütz zumindest soweit geöffnet wird, dass die lichte Querschnittsfläche der Oberwasseröffnung größer ist als die lichte Querschnittsfläche der Unterwasseröffnung, wodurch ein Wasserspiegel im Schacht auf das Niveau des Wasserspiegels im Oberwasser ansteigt;
C) in einer Wanderungs- und Auslassphase, die Dotationsströmung vom Oberwasser ins Unterwasser aufrechterhalten und der Wasserspiegel im Schacht auf dem Niveau des Wasserspiegels im Oberwasser gehalten wird, gegebenenfalls mittels Anpassen der lichten Querschnittsflächen der Oberwasseröffnung und der Unterwasseröffnung durch verstellen von Oberwasserschütz und/oder Unterwasserschütz;
D) in einer Abstauphase nach Ablauf einer Zeiteinheit das Unterwasserschütz geöffnet und das Oberwasserschütz teilweise geschlossen wird, wodurch eine Dotationsströmung vom Oberwasser ins Unterwasser eingestellt wird.

In einer bevorzugten Ausführung der Erfindung weist der Schacht zumindest drei beckenartige Abschnitte auf, wobei benachbarte beckenartige Abschnitte jeweils mit einem Durchlass miteinander verbunden sind. Vorteilhaft weist der Schacht weiters eine Trennwand auf, die - bei Vorliegen eines fließenden Gewässers - im Wesentlichen parallel zu einer Flussrichtung angeordnet ist. Die beckenartigen Abschnitte sind dann im Schacht treppenhausartig seitlich nebeneinander, jeweils abwechselnd an einer ersten Seite oder einer zweiten Seite der Trennwand, und abschnittsweise übereinander angeordnet, wodurch ein oberster beckenartiger Abschnitt im Wesentlichen vertikal über einem untersten beckenartigen Abschnitt zu liegen kommt. Hierdurch kann die Wanderung der Wassertiere besser gesteuert und die Wahrscheinlichkeit erhöht werden, dass die Wassertiere dem vorgegebenen Weg folgen und in das Oberwasser gelangen. Es ergibt sich zusätzlich der Vorteil, dass sowohl im untersten als auch im obersten Beckenabschnitt jederzeit eine Dotationsströmung vorherrscht. Diese lockt die Wassertiere mit positiver Rheotaxis vom Unterwasser ins Oberwasser und motiviert die Wassertiere zum Einwandern in den Schacht sowie zum Auswandern aus dem Schacht, wodurch die Wahrscheinlichkeit eines unbeabsichtigten Verweilens oder Umkehrens der Wassertiere im Schacht vermindert wird.

Vorteilhaft sind in den beckenartigen Abschnitten Rampen für die Wanderung der Wassertiere vorgesehen, wobei alle Rampen vorzugsweise die gleiche Steigung aufweisen, sodass die Wassertiere keine zu flachen oder zu steilen Wegstrecken vorfinden. Die Aufstiegsrampen steigen jeweils zum nächst höheren beckenartigen Abschnitt oder zur Oberwasseröffnung hin kontinuierlich ohne abrupte Hindernisse an. Durch das gezielte Vorsehen von Durchlässen in der Trennwand kann die Dotationsströmung derart gelenkt werden, dass die Wassertiere den Aufstiegsrampen folgen. Durch das Vorsehen von im Wesentlichen horizontalen Podesten an oder nahe der beiden Seiten der Durchlässe wird die Wegführung im Schacht verbessert, insbesondere für bodennahe Wanderer.

Die Gestaltung der Aufstiegsrampen erfolgt derart, dass diese jeweils mit einer Deckschicht aus natürlichem Sohlsubstrat und/oder Kantkorn versehen sind. Hierdurch wird den Wassertieren ein natürliches Habitat suggeriert, wodurch die Wahrscheinlichkeit einer erfolgreichen Wanderung erhöht wird. Zusätzlich setzt das Kantkorn die Fließgeschwindigkeit des Gewässers herab. Jede Deckschicht ist mittels Gabionen gegen Ausspülung gesichert.

Das Öffnen und Verschließen von Unterwasserschütz und Oberwasserschütz, die vorzugsweise als Schieber ausgebildet sind, ist manuell oder automatisiert steuerbar. Dies ermöglicht vorteilhafterweise die hydraulischen Bedingungen im Bereich des Aufstiegseinlasses und innerhalb des Schachtes jederzeit zu kontrollieren. Erforderliche Lockströmung, Fließgeschwindigkeit und Wasserspiegel im Schacht können hierdurch jederzeit an die einzelnen Phasen einer Wanderung angepasst werden. Die Öffnungsweiten des Unterwasserschützes und des Oberwasserschützes werden hierbei mittels des erfindungsgemäßen Verfahrens zur Wanderung von Wassertieren angepasst.

Das Vorsehen einer Strukturierung in einem der Unterwasseröffnung vorgelagerten Bereich ermöglicht durch Vermeidung von Abwanderung und Senkung des Prädationsdruckes, dass die Aufenthaltsdauer in diesem Bereich maximiert wird. Zusätzlich sind diese Strukturen hydraulisch wirksam, und es kommt vorteilhaft zu einer Vermeidung von Auswaschung und von zu turbulenten Strömungsverhältnissen.

Zusätzlich kann in einer weiteren Ausführungsform der Erfindung im Unterwasser zwischen der Unterwasseröffnung und dem untersten beckenartigen Abschnitt ein Vorlaufbecken vorgesehen sein. Dieses Vorlaufbecken ist in einem Vorlaufbereich ebenfalls strukturiert ausgebildet und erhöht die Wahrscheinlichkeit, dass die Wassertiere bis zum Schließen der Einstiegsschütz im Bereich des Schachtes verbleiben. Falls die Durchflussmenge des Wassers pro Zeiteinheit im Bereich des Oberwassers zu hoch ist und/oder falls eine zusätzliche Dotationsströmung im Vorlaufbecken vorteilhaft ist, kann in einer weiteren Ausführungsform der Erfindung ein Dotationsrohr vorgesehen sein, das einen oberwasserseitigen Rohreinlass sowie einen unterwasserseitigen Auslass in oder vor das Vorlaufbecken aufweist.

In einer weiteren vorteilhaften Ausführungsform der Erfindung ist die Oberwasseröffnung an eine Oberwasser-Beckenkaskade mit ansteigenden Beckenwasserspiegeln und/oder die Unterwasseröffnung an eine Unterwasser-Beckenkaskade mit abfallenden Beckenwasserspiegeln angeschlossen. Hierdurch kann beispielsweise ein größerer Höhenunterschied zwischen Oberwasser und Unterwasser überwunden oder besonderen topographischen Gegebenheiten Rechnung getragen werden.

Weitere vorteilhafte Ausführungsbeispiele der Erfindung werden im Folgenden anhand der Figuren näher erläutert.
Figur 1 zeigt in einem Längsschnitt (Schnitt B-B laut Figur 3) eine erfindungsgemäße Vorrichtung zur Wanderung von Wassertieren während einer Einlassphase.
Figur 2 zeigt die Vorrichtung von Figur 1 anhand eines Schnitts C-C.
Figur 3 zeigt die Vorrichtung von Figur 1 anhand eines Schnitts A-A.
Figur 4 zeigt in einem Längsschnitt (Schnitt B-B aus Figur 3) die Vorrichtung zur Wanderung von Wassertieren aus Figur 1 während einer Wanderungs- und Auslassphase.

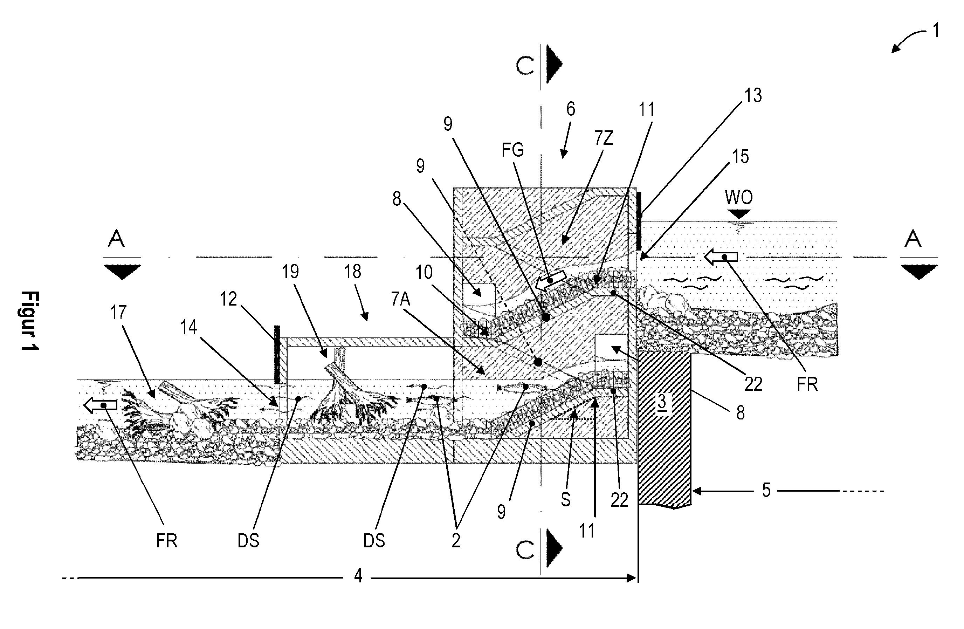

Die Figuren 1 bis 4 zeigen in einer schematischen Darstellung eine Vorrichtung 1 zur Wanderung von Wassertieren 2 gemäß einer erfindungsgemäßen Ausführungsform. Mittels der Vorrichtung 1 können Wassertiere 2 eine Barriere 3 in einem Gewässer überwinden und von einem Unterwasser 4 in ein Oberwasser 5, oder umgekehrt, wandern. Handelt es sich bei dem Gewässer um ein fließendes Gewässer, beispielsweise einen Fluss, so ist die Vorrichtung 1 im Wesentlichen entlang einer Flussrichtung FR angeordnet.

Die Vorrichtung 1 umfasst in ihrer dargestellten Ausführungsform im Wesentlichen einen Schacht 6, der in drei beckenartige Abschnitte 7A, 7B, 7Z, die über zwei Durchlässe 8 miteinander verbunden sind, unterteilt ist. Der oberste beckenartige Abschnitt 7Z kommuniziert über eine mit einem Oberwasserschütz 13 verschließbare Oberwasseröffnung 15 mit dem Oberwasser 5. Der unterste beckenartige Abschnitt 7A ist über eine Unterwasseröffnung 14 mit einem Vorlaufbecken 18 verbunden, welches Vorlaufbecken 18 optional ist. Dieses Vorlaufbecken 18 kommuniziert über eine mit einem Unterwasserschütz 12 verschließbare Unterwasseröffnung 14 mit dem Unterwasser 4. Die Unterwasseröffnung 14 und die Oberwasseröffnung 15 sind konstruktiv so ausgelegt, dass oberflächennahe und bodenorientierte Wassertiere 2 ungehindert in den Schacht 6 einwandern oder einschwimmen können. Ein vorgelagerter Bereich 17 des untersten beckenartigen Abschnitts 7A sowie ein Vorlaufbereich 19 des Vorlaufbeckens 18 sind strukturiert ausgebildet.

Die Dimensionen von Unterwasseröffnung 14, Oberwasseröffnung 15 und den Durchlässen 8 sind entsprechend den Dimensionen des Schachtes 6, einer natürlichen Strömungsgeschwindigkeit des Gewässers sowie an ein Aufstiegsverhalten der vorherrschenden Arten von Wassertieren 2 angepasst. Die hierdurch eingestellte Fließgeschwindigkeit FG, beziehungsweise die Strömung des Gewässers, dienen hierbei auch als Dotationsströmung DS für Wassertiere 2 mit positiver Rheotaxis. Sollte diese Dotationsströmung DS nicht ausreichen oder ist eine zusätzliche Dotationsströmung DS im Vorlaufbecken erwünscht sein, kann die Vorrichtung 1 zusätzlich ein Dotationsrohr mit einem oberwasserseitigen Rohreinlass sowie einem unterwasserseitigen Auslass in das Vorlaufbecken 18 aufweisen.

Die beckenartigen Abschnitte 7A, 7B, 7Z sind im Schacht 6 treppenhausartig angeordnet. Das bedeutet, dass die beckenartigen Abschnitte 7A, 7B, 7Z seitlich nebeneinander, jeweils abwechselnd an einer ersten Seite 16A oder einer zweiten Seite 16B einer im Wesentlichen parallel zur Flussrichtung FR angeordneten Trennwand 16, und abschnittsweise übereinander angeordnet sind. Hierdurch kommt bei einer ungeraden Anzahl an beckenartigen Abschnitten 7 ein oberster beckenartiger Abschnitt 7Z immer im Wesentlichen vertikal über einem untersten beckenartigen Abschnitt 7A zu liegen. Der Schacht 6 kann dabei konstruktiv vorkonfektioniert, beispielsweise aus gegossenen BetonFertigteilen zusammensetzbar, sein, sodass die Anzahl der beckenartigen Abschnitte 7 schnell, flexibel und kostengünstig an die Höhe der zu überwindenden Barriere 3 angepasst werden kann.

In den beckenartigen Abschnitten 7A, 7B, 7Z befinden sich zum Durchlass zum nächst höheren beckenartigen Abschnitt 7A, 7B, 7Z oder zur Oberwasseröffnung 15 hin ansteigende Rampen 9. Diese Rampen 9 habe eine Breite von zumindest eineinhalbmal der Fischlänge der größten zu erwartenden Fischart und dienen der Wanderung der Wassertiere 2, insbesondere oberflächennahen und bodenorientierten Wassertieren 2, und weisen vorzugsweise eine gleiche Steigung S auf. Im Bereich ihrer unteren Enden 10 und/oder oberen Enden 11 weisen die Rampen 9 im Wesentlichen horizontale Podeste 22 auf. Die Durchlässe 8 sind vorzugsweise an oder nahe den Podesten 22 angeordnet. Die Rampen 9 sind jeweils mit einer Deckschicht 20 aus natürlichem Sohlsubstrat und/oder Kantkorn versehen, wobei vorzugsweise jede Deckschicht 20 mittels Gabionen 21 gesichert ist.

Das Unterwasserschütz 12 und das Oberwasserschütz 13 sind als Schieber ausgebildet und können manuell oder automatisiert geöffnet und geschlossen werden. Hierdurch kann ein manuell oder automatisiert gesteuertes Verfahren zur Wanderung von Wassertieren durchgeführt werden, das folgende Schritte aufweist:
In einer Einlassphase wandern oder schwimmen die Wassertiere 2 in den Schacht 6 oder das Vorlaufbecken 18 ein. Hierzu wird das Unterwasserschütz 12 geöffnet und gegebenenfalls das Oberwasserschütz 13 teilweise geschlossen, wodurch die Dotationsströmung DS vom Oberwasser 5 ins Unterwasser 4 eingestellt wird. Diese Situation ist in Figur 1 dargestellt.

In einer Aufstauphase wird nach Ablauf einer Zeiteinheit T1, das Unterwasserschütz 12 teilweise geschlossen und das Oberwasserschütz 13 zumindest soweit geöffnet, dass die lichte Querschnittsfläche der Oberwasseröffnung 15 größer ist als die lichte Querschnittsfläche der Unterwasseröffnung 14. Hierdurch steigt ein Wasserspiegel im Schacht WS auf das Niveau eines Wasserspiegels WO im Oberwasser 5 an. Das Ausmaß der Zeiteinheit T1 hängt dabei im Wesentlichen von der Fließgeschwindigkeit FG des Gewässers sowie von den konstruktiven Dimensionen (beispielsweise Volumen des Schachtes 6 und des Vorlaufbeckens 18) der Vorrichtung 1 ab. Vorteilhafterweise wird das Ausmaß der Zeiteinheit T1 an das Wanderverhalten der Wassertiere 2 angepasst. Die Zeiteinheit T1 kann beispielsweise zwischen 60 und 180 Sekunden betragen, wobei dieser Wert in keiner Weise als einschränkend zu betrachtend ist.

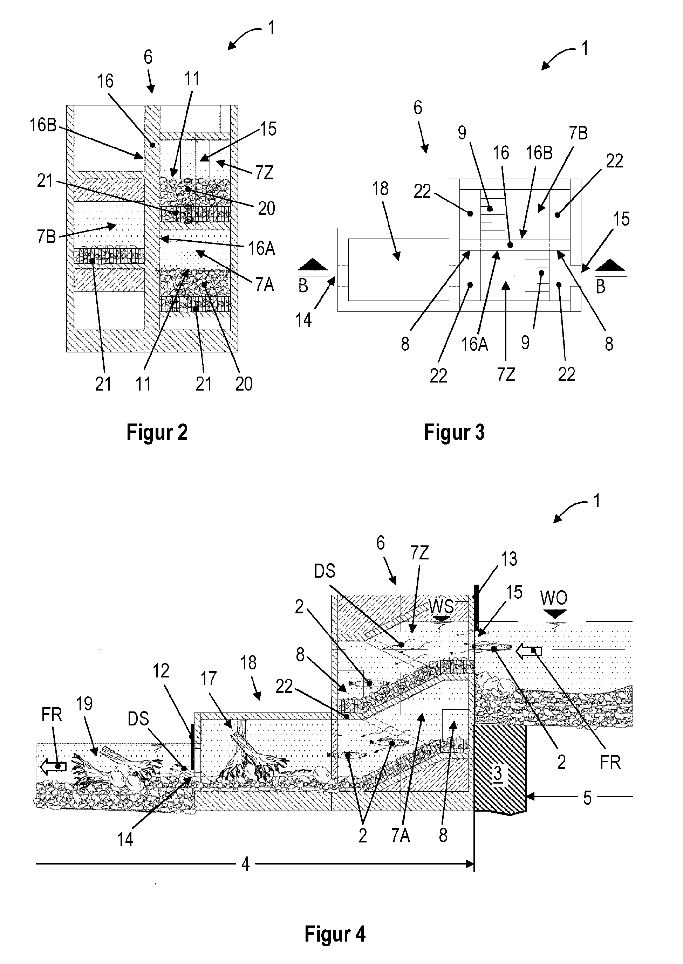

In einer Wanderungs- und Auslassphase wandern oder schwimmen die Wassertiere 2 aus dem Schacht 6 oder dem Vorlaufbecken 18 aus. Diese Situation ist in Figur 4 dargestellt. Dabei wird die Dotationsströmung DS vom Oberwasser 5 ins Unterwasser 4 aufrechterhalten und der Wasserspiegel im Schacht WS auf dem Niveau des Wasserspiegels WO im Oberwasser 5 gehalten. Dies geschieht gegebenenfalls mittels Anpassen der lichten Querschnittsflächen der Oberwasseröffnung 15 und/oder der Unterwasseröffnung 14 durch Verstellen von Oberwasserschütz 13 und/oder Unterwasserschütz 12.

In einer Abstauphase wird nach Ablauf einer Zeiteinheit T2, also nachdem im Wesentlichen alle Wassertiere 2 aus dem Schacht 6 oder dem Vorlaufbecken 18 ausgewandert oder ausgeschwommen sind, das Unterwasserschütz 12 geöffnet und das Oberwasserschütz 13 teilweise geschlossen. Hierdurch wird die Dotationsströmung DS vom Oberwasser 5 ins Unterwasser 4 (wieder) eingestellt. Diese Situation in Figur 1 dargestellt, und bildet den Abschluss eines Verfahrensdurchgangs beziehungsweise den Anfang des nächstfolgenden Verfahrensdurchgangs. Das Ausmaß der Zeiteinheit T2 hängt dabei im Wesentlichen von der Fließgeschwindigkeit FG des Gewässers sowie von den konstruktiven Dimensionen (beispielsweise Volumen des Schachtes 6 und des Vorlaufbeckens 18) der Vorrichtung 1 ab. Vorteilhafterweise wird das Ausmaß der Zeiteinheit T2 an das Wanderverhalten der Wassertiere 2 angepasst. Die Zeiteinheit T2 kann beispielsweise zwischen 60 und 180 Sekunden betragen, wobei dieser Wert in keiner Weise als einschränkend zu betrachtend ist.

Die konstruktiven Dimensionen der Vorrichtung 1 sowie die Zeiteinheiten T1, T2 des Verfahrens werden bei dieser sowie bei jeder weiteren erfindungsgemäßen Ausführungsform an das Gewässer (Fließgeschwindigkeit FG, Wassertiefe, usw.), die topografischen Gegebenheiten, die Barriere 3, an das Aufstiegsverhalten der vorherrschenden Arten von Wassertieren 2 sowie gegebenenfalls an örtliche oder überörtliche Bestimmungen angepasst.

Eine in keiner Weise als einschränkend zu betrachtende Ausführungsform kann derart ausgelegt sein, dass der Schacht 6 eine rechteckige Nettogrundfläche aufweist, die der Länge nach im Wesentlichen parallel zur Flussrichtung FR angeordnet ist, und die zwischen 1 Meter und 3 Meter, vorzugsweise zwischen 1,85 Meter und 2,35 Meter, breit und zwischen 1 Meter und 3 Meter, vorzugsweise zwischen 1,75 Meter und 2,25 Meter, lang ist. Die Aufstiegsrampen 9 inklusive etwaiger Podeste 22 weisen hierbei jeweils eine Breite von im Wesentlichen der halben um die Trennwand 16 verringerten Schachtbreite und jeweils eine Länge von im Wesentlichen der Schachtlänge auf. Das Vorlaufbecken 18 weist eine rechteckige Nettogrundfläche auf, die der Länge nach im Wesentlichen parallel zur Flussrichtung FR angeordnet ist, und die zwischen 0,5 Meter und 2 Meter, vorzugsweise zwischen 1 Meter und 1,5 Meter, breit und zwischen 1 Meter und 3 Meter, vorzugsweise zwischen 1,75 Meter und 2,25 Meter, lang ist. Einstiegsschütz 12, Ausstiegsschütz 13 und die Durchlässe 8 weisen eine Breite von 0,2 bis 0,6 Meter, vorzugsweise im Wesentlichen 0,4 Meter, und eine Höhe von 0,23 bis 0,68 Meter, vorzugsweise im Wesentlichen 0,45 Meter, auf.

Das Gewässer, die topografischen Gegebenheiten oder die Barriere 3 können bedingen, dass die Oberwasseröffnung 15 an eine Oberwasser-Beckenkaskade mit ansteigenden Beckenwasserspiegeln angeschlossen ist, und/oder dass die Unterwasseröffnung 14 an eine Unterwasser-Beckenkaskade mit abfallenden Beckenwasserspiegeln angeschlossen ist.

Es kann erwähnt werden, dass bei einer erfindungsgemäßen Vorrichtung 1 der Schacht 6 und/oder die Anordnung der beckenartigen Abschnitte 7 im Schacht auch andersartig ausgebildet sein kann/können; beispielsweise kann der Schacht 6 einen kreisförmigen oder elliptischen Querschnitt aufweisen, oder können beckenartigen Abschnitte 7 übereinander und teilweise seitlich versetzt angeordnet sein, wobei dann die Durchlässe 8 entsprechend in den im Wesentlichen horizontalen Zwischenwänden ausgebildet sind. Ebenso kann die geometrische Form der beckenartigen Abschnitte 7 komplex und/oder vieleckig sein, wobei Oberwasseröffnung 15, Unterwasseröffnung 14 und die Durchlässe 8 entsprechend unterschiedlich angeordnet sind, um besonderen Arten von Wassertieren 2, konstruktiven Vorstellungen oder topografischen Gegebenheiten des Gewässers oder der Gewässerlandschaft Rechnung zu tragen.

Weiters ist zu erwähnen, dass die erfindungsgemäße Vorrichtung 1 auch an nicht fließenden Gewässern sowohl für aufwandernde als auch für abwandernde Wassertiere 2 genutzt werden kann.

## Patentansprüche

1. An einem durch eine Barriere (3) in ein Unterwasser (4) und ein Oberwasser (5) getrenntes Gewässer angeordnete Vorrichtung (1) zur Wanderung von Wassertieren (2) zwischen dem Unterwasser (4) und dem Oberwasser (5), mit einem Schacht (6), der zumindest zwei über zumindest einen Durchlass (8) miteinander verbundene beckenartige Abschnitte (7) aufweist, wobei der Schacht (6) eine mit einem Unterwasserschütz (12) verschließbare Unterwasseröffnung (14) im untersten beckenartigen Abschnitt, der mit dem Unterwasser (4) kommuniziert, und eine mit einem Oberwasserschütz (13) verschließbare Oberwasseröffnung (15) im obersten beckenartigen Abschnitt, der mit dem Oberwasser (5) kommuniziert, aufweist, **dadurch gekennzeichnet, dass** zumindest zwei der beckenartigen Abschnitte (7) des Schachts (6) treppenhausartig seitlich nebeneinander und abschnittsweise übereinander angeordnet sind.

2. Vorrichtung (1) gemäß Anspruch 1, **dadurch gekennzeichnet, dass** der Schacht (6) zumindest drei miteinander kommunizierende beckenartige Abschnitte (7A, 7B, 7Z) aufweist, wobei benachbarte beckenartige Abschnitte (7A, 7B, 7Z) jeweils über einen Durchlass (8) miteinander verbunden sind.

3. Vorrichtung (1) gemäß Anspruch 2, **dadurch gekennzeichnet, dass** die beckenartigen Abschnitte (7A, 7B, 7Z) im Schacht (6) treppenhausartig seitlich nebeneinander, jeweils abwechselnd an einer ersten Seite (16A) oder einer zweiten Seite (16B) einer im Wesentlichen parallel zu einer Flussrichtung (FR) angeordneten Trennwand (16), und abschnittsweise übereinander angeordnet sind, wobei ein oberster beckenartiger Abschnitt (7Z) im Wesentlichen vertikal über einem untersten beckenartigen Abschnitt (7A) angeordnet ist.

4. Vorrichtung (1) gemäß einem der vorhergehenden Ansprüche, **dadurch gekennzeichnet, dass** in den beckenartige Abschnitten (7A, 7B, 7Z) zum Durchlass zum nächst höheren beckenartigen Abschnitt (7A, 7B, 7Z) oder zur Oberwasseröffnung (15) hin ansteigende Rampen (9) für die Wanderung der Wassertiere (2) vorgesehen sind, wobei vorzugsweise die Rampen (9) eine gleiche Steigung (S) aufweisen.

5. Vorrichtung (1) gemäß Anspruch 4, **dadurch gekennzeichnet, dass** die Rampen (9) im Bereich ihrer Enden (10,11) im Wesentlichen horizontale Podeste (22) aufweisen, wobei vorzugsweise die Durchlässe (8) an oder nahe den Podesten (22) angeordnet sind.

6. Vorrichtung (1) gemäß Anspruch 4 oder 5, **dadurch gekennzeichnet, dass** die Rampen (9) jeweils mit einer Deckschicht (20) aus natürlichem Sohlsubstrat und/oder Kantkorn versehen sind, wobei vorzugsweise jede Deckschicht (20) mittels Gabionen (21) gesichert ist.

7. Vorrichtung (1) gemäß einem der vorhergehenden Ansprüche, **dadurch gekennzeichnet, dass** das Unterwasserschütz (12) und das Oberwasserschütz (13) manuell oder automatisiert steuerbar zum Öffnen und Verschließen ausgebildet sind, wobei das Unterwasserschütz (12) und das Oberwasserschütz (13) vorzugsweise als Schieber ausgebildet sind.

8. Vorrichtung (1) gemäß einem der vorhergehenden Ansprüche, **dadurch gekennzeichnet, dass** die Unterwasseröffnung (14), die Oberwasseröffnung (15) und der zumindest eine Durchlass (8) derart dimensioniert ausgebildet sind, dass eine Fließgeschwindigkeit (FG) des Gewässers vom Oberwasser (5) durch den Schacht (6) ins Unterwasser (4) an ein Aufstiegsverhalten der Wassertiere (2) angepasst wird.

9. Vorrichtung (1) gemäß einem der vorhergehenden Ansprüche, **dadurch gekennzeichnet, dass** im Unterwasser (4) ein der Unterwasseröffnung (14) entgegen der Flussrichtung (FR) vorgelagerter Bereich (17) strukturiert ausgebildet ist.

10. Vorrichtung (1) gemäß einem der vorhergehenden Ansprüche, **dadurch gekennzeichnet, dass** zwischen der Unterwasseröffnung (14) und dem untersten beckenartigen Abschnitt (7A) ein mit dem Unterwasser (4) kommunizierendes Vorlaufbecken (18) vorgesehen ist, wobei das Vorlaufbecken (18) in einem Vorlaufbereich (19) strukturiert ausgebildet ist.

11. Vorrichtung (1) gemäß Anspruch 10, **dadurch gekennzeichnet, dass** ein Dotationsrohr einen oberwasserseitigen Rohreinlass sowie einen unterwasserseitigen Auslass in das Vorlaufbecken (18) aufweist.

12. Vorrichtung (1) gemäß einem der vorhergehenden Ansprüche, **dadurch gekennzeichnet, dass** die Oberwasseröffnung (15) an eine Oberwasser-Beckenkaskade mit ansteigenden Beckenwasserspiegeln angeschlossen ist, und/oder dass die Unterwasseröffnung (14) an eine Unterwasser-Beckenkaskade mit abfallenden Beckenwasserspiegeln angeschlossen ist.

13. Verfahren zur Wanderung von Wassertieren (2) in einem durch eine Barriere (3) in ein Unterwasser (4) und ein Oberwasser (5) getrenntes Gewässer mittels einer Vorrichtung (1) mit einem Schacht (6), der eine mit einem Unterwasserschütz (12) verschließbare Unterwasseröffnung (14) und eine mit einem Oberwasserschütz (13) verschließbare Oberwasseröffnung (15) aufweist, **dadurch gekennzeichnet, dass** in
A) einer Einlassphase das Unterwasserschütz (12) geöffnet und gegebenenfalls das Oberwasserschütz (13) teilweise geschlossen wird, wodurch eine Dotationsströmung (DS) vom Oberwasser (5) ins Unterwasser (4) eingestellt wird;
B) in einer Aufstauphase nach Ablauf einer Zeiteinheit (T1) das Unterwasserschütz (12) teilweise geschlossen und das Oberwasserschütz (13) zumindest soweit geöffnet wird, dass die lichte Querschnittsfläche der Oberwasseröffnung (15) größer ist als die lichte Querschnittsfläche der Unterwasseröffnung (14), wodurch ein Wasserspiegel im Schacht (WS) auf das Niveau des Wasserspiegels (WO) im Oberwasser (5) ansteigt;
C) in einer Wanderungs- und Auslassphase die Dotationsströmung (DS) vom Oberwasser (5) ins Unterwasser (4) aufrechterhalten und der Wasserspiegel im Schacht (WS) auf dem Niveau des Wasserspiegels (WO) im Oberwasser (5) gehalten wird, gegebenenfalls mittels Anpassen der lichten Querschnittsflächen der Oberwasseröffnung (15) und der Unterwasseröffnung (14) durch Verstellen von Oberwasserschütz (13) und/oder Unterwasserschütz (12);
D) in einer Abstauphase nach Ablauf einer Zeiteinheit (T2) das Unterwasserschütz (12) geöffnet und das Oberwasserschütz (13) teilweise geschlossen wird, wodurch eine Dotationsströmung (DS) vom Oberwasser (5) ins Unterwasser (4) eingestellt wird.

14. Verfahren gemäß Anspruch 13, **dadurch gekennzeichnet, dass** das Öffnen und Schließen von Unterwasserschütz (12) und Oberwasserschütz (13) manuell oder automatisch derart gesteuert werden, dass eine Fließgeschwindigkeit (FG) des Gewässers vom Oberwasser (5) durch den Schacht (6) ins Unterwasser (4) an ein Aufstiegsverhalten der vorherrschenden Arten von Wassertieren 2 angepasst wird.
